# EUROPEAN PATENT APPLICATION

(11) **EP 4 265 468 A1**
(43) Date of publication of application: **25.10.2023**
(21) Application number: 22169071.2
(22) Date of filing: 20.04.2022
(51) Int. Cl.: B60L 53/50, B60L 53/55

(54) **METHOD AND EQUIPMENT FOR CHARGING AN ELECTRIC VEHICLE**

(30) Priority: 19.04.2022 TR 202206230
(71) Applicant: Vestel Elektronik Sanayi ve Ticaret A.S., 45030 Manisa (TR)
(72) Inventor: OZVURAL, Gorkem, Manisa (TR)
(74) Representative: Page White Farrer

(57) **Abstract**

There is provided an electric vehicle supply equipment (201, 401, 501), EVSE, for charging an electric vehicle. The EVSE (201, 401, 501) has a primary power supply circuit (203, 403, 503) for connection to a mains power supply to receive electrical energy from the mains power supply. The EVSE (201, 401, 501) also has a detection circuit (213) for detecting connection of a said electric vehicle or a charging cable of a said electric vehicle to the EVSE (201, 401, 501). The detection circuit (213) is configured to detect a presence of a resistor of a said connected electric vehicle or a said connected charging cable of a said electric vehicle via a contact (215, 415, 515), and in response, to provide a wake-up signal to the primary power supply circuit (203, 403, 503) to cause the primary power supply circuit (203, 403, 503) to draw electrical energy from the mains power supply.

## Description

### Technical Field

The present disclosure relates to a method and an equipment for charging an electric vehicle.

### Background

An electric vehicle (EV) is a vehicle that uses one or more electric motors for propulsion. EVs have become increasingly popular compared to vehicles using combustion engines, due to an increased focus on using renewable energy in an attempt to reduce the environmental damage caused by the pollution of vehicles.

Electrical and electronic devices, including EVs, require power to function. Many EVs provide electrical energy to power their electric motor(s) using a rechargeable battery found within the EV. An electric vehicle supply equipment (EVSE) is a piece of equipment that provides electrical power for charging plug-in electric vehicles. When an EV is connected to the EVSE, the EVSE can provide electrical energy to the EV, in order to charge the battery of the EV.

EVSEs are often configured such that they power down when an EV disconnects from the EVSE, in order to save energy. However, while the EVSE has powered down, it will still use some electrical energy in order to detect that an EV has reconnected to the EVSE.

It has been suggested to configure an EVSE with a defined sleep mode, and to use control signals as a wake-up trigger. However, the use of control signals, generated by the EVSE, means that energy is still being used even when the EVSE is in the sleep mode. Alternatively, it has been suggested to wake-up the EVSE by means of a user pressing a button on the EVSE or EV, but this introduces known problems surrounding user error.

### Summary

According to an aspect, there is provided an electric vehicle supply equipment, EVSE, for charging an electric vehicle, the EVSE comprising:
a primary power supply circuit for connection to a mains power supply to receive electrical energy from the mains power supply;
a secondary power supply circuit arranged to receive electrical energy from the primary power supply circuit;
a charging controller connected to the secondary power supply circuit, the secondary power supply circuit being arranged to provide electrical energy to the charging controller to enable the charging controller to detect and communicate with a said electric vehicle connected to the EVSE in use, the charging controller being configured to provide a sleep signal to the primary power supply circuit when a said electric vehicle or a charging cable of a said electric vehicle is disconnected from the EVSE, the sleep signal being arranged to cause the primary power supply circuit to at least partially power down;
a detection circuit for detecting connection of a said electric vehicle or a charging cable of a said electric vehicle to the EVSE; and
a contact for connection to a said electric vehicle or charging cable,
wherein the detection circuit is configured to detect a presence of a resistor of a said connected electric vehicle or a said connected charging cable via the contact, and in response, to provide a wake-up signal to the primary power supply circuit to cause the primary power supply circuit to draw electrical energy from the mains power supply and provide electrical energy for communication signalling between the EVSE and a said electric vehicle, to be able to charge a said electric vehicle.

The EVSE may comprise:
a relay circuit, the relay circuit being connected to the contact, and being configured to switch the contact between: i) the secondary power supply circuit when the primary power supply circuit is receiving electrical energy from the mains power supply, and ii) the detection circuit when the primary power supply circuit has at least partially powered down,
wherein the detection circuit is configured to detect the presence of a said resistor when the contact is connected to the detection circuit by the relay circuit.

The detection circuit may form a voltage divider circuit with a said resistor of a said connected electric vehicle or a said connected charging cable , the output from the voltage divider circuit forming the wake-up signal.

The detection circuit may consist of passive components.

The detection circuit may be connectable to the mains power supply, to receive electrical energy from the mains power supply when the EVSE is in use.

A said resistor of a said connected electric vehicle or a connected charging cable which is detectable by the detection circuit may comprise:
a resistor on a proximity pilot signal line, and/or
a resistor on a control pilot signal line.

The detection circuit may be comprised within the secondary power supply circuit.

The detection circuit may be powered by at least one of a battery and a capacitor, comprised within the EVSE, when the primary power supply circuit has at least partially powered down.

The battery and/or capacitor respectively may be arranged to be charged while the primary power supply circuit is connected to a mains power supply.

The detection circuit may be powered by a low power supply circuit which is connectable to a mains power supply, wherein the low power supply circuit uses less power than the primary power supply circuit.

The secondary power supply circuit may be configured to receive no power from the primary power supply circuit when the primary power supply circuit has at least partially powered down.

According to an aspect, there is provided a method, performed by an EVSE, for charging an electric vehicle, the method comprises:
receiving electrical energy from a mains power supply at a second power supply circuit via a primary power supply circuit;
providing electrical energy for communication signalling between the EVSE and a connected electric vehicle, through the secondary power supply circuit which is connected to the electric vehicle or a charging cable of the electric vehicle, to establish communication between the EVSE and the connected electric vehicle;
determining that the electric vehicle or the charging cable is disconnected from the EVSE;
when the electric vehicle or the charging cable is disconnected, providing a sleep signal to the primary power supply circuit, causing the primary power supply circuit to at least partially power down;
when the primary power supply circuit is at least partially powered down, detecting the presence of a resistor of a connected electric vehicle or a charging cable via a contact of the EVSE; and
in response to detecting the presence of the connected electric vehicle or charging cable, providing a wake-up signal to the primary power supply circuit, the wake-up signal causing the primary power supply circuit to receive electrical energy from the mains power supply for charging the electric vehicle.

The method may comprise:
when the primary power supply circuit is at least partially powered down:
operating a relay circuit to connect the contact and a detection circuit of the EVSE,
wherein the detecting the presence of a resistor of a connected electric vehicle or a charging cable is performed by the detection circuit.

The operating a relay circuit may comprise:
operating the relay circuit to switch a connection between i) the contact and the secondary power supply, to a connection between ii) the contact and the detection circuit.

The detecting the presence of a resistor of a connected electric vehicle or a charging cable may comprise at least one of:
detecting a resistor on a control pilot signal line of the connected electric vehicle; and
detecting a resistor on a proximity pilot signal line of the connected charging cable.

### Brief Description of the Drawings

To assist understanding of the present disclosure and to show how embodiments may be put into effect, reference is made by way of example to the accompanying drawings in which:
Figure 1 shows an example flow diagram illustrating the transition between a normal mode and a lower power mode for an EVSE according to embodiments of the present disclosure;
Figure 2 shows schematically a first example of circuitry for an EVSE according to embodiments of the present disclosure;
Figure 3a shows schematically a detailed view of an example of circuitry for an EV and EV charging cable, which may be connected to the EVSE according to embodiments of the present disclosure;
Figure 3b shows schematically a detailed view of an example of circuitry for a charging side and EV side, which may be connected to the EVSE according to embodiments of the present disclosure;
Figure 4 shows schematically a second example of circuitry for an EVSE according to embodiments of the present disclosure; and
Figure 5 shows schematically a third example of circuitry for an EVSE according to embodiments of the present disclosure.

### Detailed Description

An electric vehicle (EV) is a vehicle that uses one or more electric motors for propulsion. EVs have become increasingly popular compared to vehicles using combustion engines, due to an increased focus on using renewable energy in an attempt to reduce the environmental damage caused by the pollution of vehicles.

Electrical and electronic devices, including EVs, require power to function. Many EVs provide electrical energy to power their electric motor(s) using a rechargeable battery found within the EV. An electric vehicle supply equipment (EVSE) is a piece of equipment that provides electrical power for charging plug-in electric vehicles. When an EV is connected to the EVSE, the EVSE can provide electrical energy to the EV, in order to charge the battery of the EV.

EVSEs are often configured such that they power down to a low power state when an EV disconnects from the EVSE, in order to save energy. However, in conventional EVSEs, while the EVSE has powered down, it will still use some electrical energy in order to detect that an EV has reconnected to the EVSE.

In examples disclosed herein, there is provided an electric vehicle supply equipment, EVSE, for charging an electric vehicle. The EVSE has a primary power supply circuit for connection to a mains power supply to receive electrical energy from the mains power supply. The EVSE also has a secondary power supply circuit arranged to receive electrical energy from the primary power supply circuit and to provide electrical energy to a charging controller to be able to detect and communicate with a said electric vehicle connected to the EVSE in use. The EVSE includes the charging controller connected to the secondary power supply circuit. The charging controller provides a sleep signal to the primary power supply circuit when a said electric vehicle or a charging cable of a said electric vehicle is disconnected from the EVSE. The sleep signal causes the primary power supply circuit to at least partially power down. The EVSE also has a detection circuit for detecting connection of a said electric vehicle or a charging cable of a said electric vehicle to the EVSE, and a contact for connection to a said electric vehicle or charging cable. The detection circuit is configured to detect a presence of a resistor of a said connected electric vehicle or a said connected charging cable of a said electric vehicle via the contact, and in response, to provide a wake-up signal to the primary power supply circuit to cause the primary power supply circuit to draw electrical energy from the mains power supply and provide electrical energy for communication signalling between the EVSE and a said electric vehicle, to be able to charge a said electric vehicle.

Therefore, this allows the EVSE to switch the power generation stages 'off' (i.e., the power stage enters into sleep mode) and switch them 'on' (i.e. the power stage wakes up from sleep mode) by means of detecting passive electrical characteristics (i.e. resistance) of lines between the EVSE and the EV/EV charging cable. In this way the EVSE does not need to rely on active signalling (e.g. control pilot signals) sent from the EVSE to the EV/EV charging cable in order to detect that the EV/EV charging cable has connected. Therefore, electrical energy usage is reduced when the EVSE is in a sleep mode/powered down mode. In this regard, given that there is already a large number of EVSEs in active use which are always connected to the grid, and given that this number will increase significantly as more EVs are put into service, any saving of energy usage by an EVSE is a considerable benefit for environmental reasons and cost reasons.

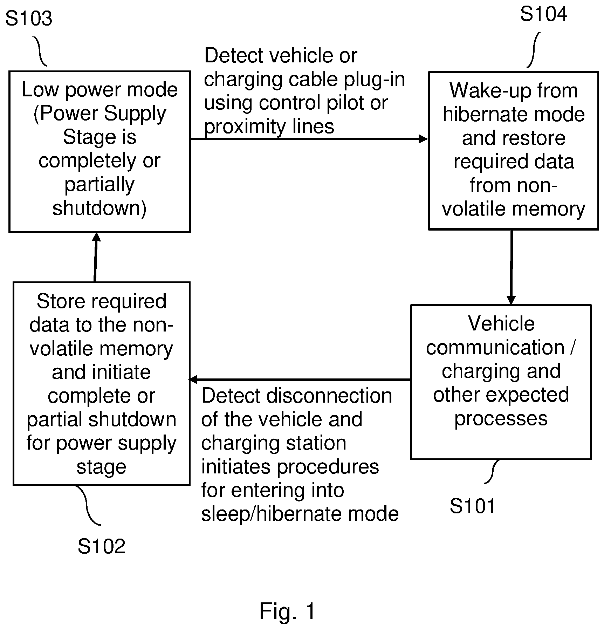

Referring now to the drawings, Figure 1 shows an example flow diagram illustrating the transition between a normal mode and a lower power mode for an EVSE according to an embodiment of the present disclosure. In the following discussions, the term EVSE is used. It should be understood that the equivalent terms of charging station or EV charging station or the like could equally be used.

An example operation of an EVSE, in order to charge an EV, is shown in the cyclic transitions of Figure 1, through steps S101 to S104. In S101, the EVSE is in a so-called 'normal mode' whereby the EVSE is connected to an EV, typically via a charging cable. In 'normal mode' the EVSE may be charging the EV, or be in communication with the EV. In S102, the EVSE detects the disconnection of the EV. The EVSE then initiates procedures for entering into a 'lower power mode'. 'Lower power mode' may also be referred to one of low power mode, sleep mode, or hibernate mode, in some examples. In response to the detected disconnection, the EVSE stores any required data to non-volatile memory of the EVSE. For example, the required data may include at least one of: a charging session start value, a charging session stop value, and meter values for the amount of energy provided. In other examples, the required data may include locally stored variables in the EVSE to be able to wake up from hibernate mode and continue operation with the same settings/configurations. Once the data is stored, the EVSE then initiates a complete, or partial, power down for power supply stages of the EVSE. In S103, the EVSE has entered the 'lower power mode'. In this way, the EVSE has completely, or partially, powered down the power supply stages. If the EVSE is connected to a mains power source, then in the 'lower power mode', the EVSE may draw little to no electrical energy from the mains power source. In S104, the EVSE detects that an EV/EV charging cable that has connected to the EVSE. This triggers a wake-up from the 'lower power mode' and restores the data from the non-volatile memory. The EVSE can then charge the EV or communicate with the EV (i.e. back to S101).

Power supply stages of the EVSE are powered down after the EV/EV charging cable is disconnected from the charging station. The 'lower power mode' will be initiated by the EVSE itself after detecting the disconnection of the EV or the EV charging cable. In other examples, the 'lower power mode' is known as a 'hibernate mode', or a 'sleep mode. The disconnection may be detected using communication signals or proximity detection signals which occur between the EVSE and the EV, or between the EVSE and the EV charging cable. According to standard IEC 61851-1 these signals are referred to as control pilot signals and proximity pilot signals, respectively. In other examples and standards, these signals may be referred to using different names. The control pilot is a communication line used to signal charging level between the car and the EVSE. The control pilot can be manipulated by the EV to initiate charging as well as other information. The typical signal used is a 1 kHz square wave at ±12 volts generated by the EVSE to detect the presence of the vehicle, communicate the maximum allowable charging current, and control charging begin/end. The proximity pilot signal is used to detect the maximum allowable charging current for the charging cable used in between the EVSE and the EV. The proximity pilot may also provide a signal to the EVs control system so it can prevent movement while connected to the to the cable itself or to the EVSE. The proximity pilot signal may also be used to signal the latch release button of the charging cable to the EV.

After the detection of the disconnection and following the completion of any pre-programmed procedures, a charging station controller of the EVSE will power down its own power supply by providing a feedback signal to the power supply stage of the charging station. Examples of pre-programmed procedures include sending transaction stop messages to a central management system if it is connected to a central system, or completing its local procedures for storing any needed information for any upcoming wake-up. In this period, the charging station will be in the 'lower power mode' while any parameters are stored in the non-volatile memory of the charging station.

While in the 'lower power mode', the power supply stages of the EVSE may be in full, or partial, power down in order to decrease power consumption to a very low level, or even to a zero watt level (as defined by the International Electrotechnical Commission, IEC). This may be performed by means of the provision of appropriate sleep mode feedback (FB), an enable signal (EN), or any other signal for the controller to ensure the EVSE remains in the 'lower power mode'.

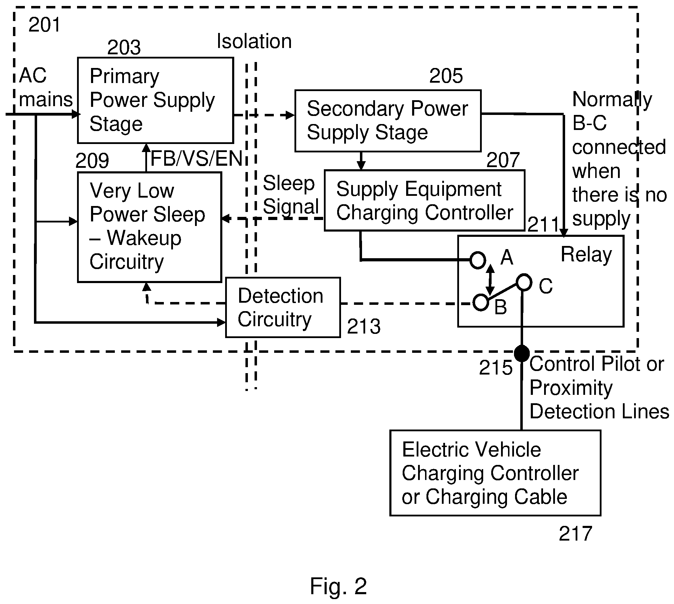

Figure 2 shows schematically a first example of circuitry for an EVSE 201 according to an embodiment of the present disclosure. Figure 2 shows the communication circuitry for the EVSE (energy transfer circuitry to charge the EV is not shown). The EVSE 201 comprises a primary power supply circuit 203. The primary power supply circuit 203 is connectable to a main power source. In this example, the mains power source is an alternating (AC) mains electricity source, provided by a national grid or the like. In other examples, the main power source may be a direct (DC) source, or other suitable power source. In use, the primary power supply circuit 203 of the EVSE 201 will receive electrical energy from the mains power source.

The EVSE 201 also comprises a secondary power supply circuit 205. The primary power supply circuit 203 and the secondary power supply circuit 205 together may form a transformer. The primary power supply circuit 203 is able to induce current in the secondary power supply circuit 205. In this way, the secondary power supply circuit 205 is galvanically isolated from the mains power source. In this way, the functional sections of primary power supply circuit 203 and the secondary power supply circuit 205 are isolated to prevent current flow between the two circuits, with no permitted direct conduction path.

In some IEC standards, communication signals between EVSEs and EVs should be safety extra-low voltage (SELV) or protected extra-low voltage (PELV). SELV is an extra low voltage electrical circuit that is electrically separated from other circuits that carry higher voltages, isolated from the earth and from the protective earth conductors of other circuits. In the SELV system, the voltage should not exceed the extra low voltage under the normal conditions or under single-fault conditions such as those from earth faults in other circuits. The SELV systems are separated from the earth such that a single fault cannot cause an electrical shock to anyone in contact with the system. IEC 61140 defines a PELV system as an electrical system in which the voltage cannot exceed extra-low voltage under normal conditions, and under single-fault conditions, except earth faults in other circuits. A PELV circuit only requires protective-separation from all circuits other than SELV and PELV (i.e., all circuits that might carry higher voltages), but it may have connections to other PELV systems and earth. In contrast to a SELV circuit, a PELV circuit can have a protective earth (ground) connection. The arrangement of the primary power supply circuit 203 and the secondary power supply circuit 205 allow for SELV and/or PELV in the secondary power supply circuit 205, in some examples.

The secondary power supply circuit 205 is connected to a controller 207. The controller may be referred to as a charging controller or supply equipment charging controller (SECC), in some examples. These terms can be used interchangeably.

The EVSE 201 of this example also comprises a relay 211. The relay 211 is connected to a contact 215. The contact 215 may be part of a socket to receive a charging cable of an EV, in some examples. The contact may be part of a plug of the EVSE that can be plugged into an EV, in some examples. The relay 211 is also connected to the controller 207. The relay 211 is also connected to a detection circuit 213. The relay 211 is arranged such that it can switch the connection between i) the contact 215 and the controller 207, and ii) the contact 215 and the detection circuit 213. This operation will be discussed in more detail below.

The relay 211 switches the signal line (connection) from the EV/charging cable of the EV between the detection circuit 213 and the secondary power supply circuit 205 according to the state of the power supply (i.e., whether electrical energy is being drawn by the EVSE 201). The signal line is connected to the detection circuit 213 when the primary power supply circuit 203 is in sleep mode. The signal line is connected to the secondary power supply circuit 205 when the primary power supply circuit 203 is drawing electrical energy and the EVSE 201 is in normal (charging) operation mode.

The controller 207 is configured to provide a sleep signal to the primary power supply circuit 203 when an EV or an EV charging cable 217 is disconnected from the EVSE 201. The sleep signal may be provided to the primary power supply circuit 203 via separate sleep-wakeup circuitry 209. The sleep-wakeup circuitry 209 provides the sleep signal to the primary power supply circuit 203. The sleep signal causes the primary power supply circuit to at least partially power down. In some examples, the primary power supply circuit 203 will power down completely (i.e., no electrical energy is drawn from the mains source).

When the primary power supply circuit 203 is at least partially powered down, and no power is induced/generated in the secondary power supply circuit 205, the controller 207 cannot detect a connection of an EV/charging cable of an EV 217 using control pilot or proximity pilot signals as in conventional EVSEs. This is because there is no voltage transfer/current transfer from an EV to the EVSE in many of the charging interface standards in such a situation. The provision of the detection circuitry 213 in the present example means that the EV/charging cable of the EV 217 can be detected when the power supply circuits are powered down.

The detection circuit 213 is connected to the mains power source. When connected to the mains power source, and receiving electrical energy, the detection circuit 213 will consume very low energy, when compared to the primary power supply circuit 203. In examples, the AC mains source, or a rectified form of this AC source, is used to power the detection circuitry 213. The detection circuitry 213 comprises a resistor. In some examples, the resistor is a high-value safety approved series resistor.

The detection circuit 213, when connected to the contact 215, is arranged to detect a resistor of an EV or EV charging cable 217. When the detection circuit 213 detects the presence of the resistor of the EV or EV charging cable 217, the detection circuit 213 knows that an EV 217 is connected to the EVSE 201. The detection circuit 213 then provides a wake-up signal to the primary power supply circuit 203. The detection circuit may provide the wake-up signal to the primary power supply circuit 203 via the sleep-wakeup circuitry 209, in some examples. When the primary power supply circuit 203 receives the wake-up signal, the primary power supply circuit 203 will draw electrical energy from the mains source, which is used to charge the connected EV 217.

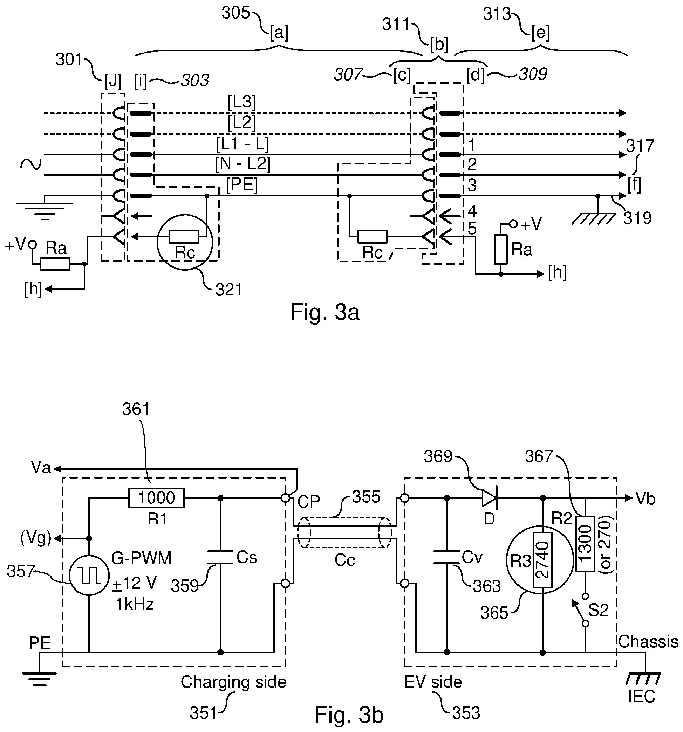

In some examples, the detection circuitry 213 is configured to detect a passive resistor in an EV charging cable 217 on a proximity pilot signal line. This resistor of the proximity pilot signal line is shown in more detail in the schematic circuit diagram of Figure 3a, discussed further below.

In some examples, the detection circuitry 213 is configured to detect a passive resistor in an EV 217 on a control pilot signal line. This resistor of the proximity pilot signal line is shown in more detail in the schematic circuit diagram of Figure 3b, discussed further below.

A proximity pilot passive resistor or a passive resistor over the control pilot line of the charging cable or EV as the case may be forms a voltage divider type circuit with the detection circuit 213, in some examples. The output from the voltage divider circuit may form the wake-up signal. For example, there may be a series high valued resistor (or resistors), arranged as a voltage divider, between the primary voltages of the EVSE and a charging controller of the EV. The value of the resistor may be 1 or more mega ohms, in some examples. As the detection circuit uses a high resistor, the amount of power used will be very low, in comparison to the primary power supply circuit 203. In other examples, the detection circuit 213 comprises any appropriate type of circuitry that can output a wake-up signal when detecting the resistor(s) of the charging cable or EV as the case may be.

In this example, the relay 211 is used with the detection circuitry 213 because in some cases the Thevenin Equivalent resistance of the non-powered secondary circuit including the secondary power supply circuit 205 and controller 207 may be very low compared to the high value safety approved resistors in the detection circuitry 213. In some cases, this may lead to a sub-optimal performance of the detection circuit 213 as the resistance from the passive resistance on the proximity pilot line or the resistance on the EV over control pilot line may be close to the Thevenin equivalent of the secondary circuit if compared to the high value safety approved resistors of detection circuitry 213.

Figure 3a shows schematically a detailed view of an example of circuitry for an EV and EV charging cable, which may be connected to the EVSE 201.

The circuitry of Figure 3a has five main parts including an EVSE socket 301 for receiving a charging cable plug, a charging cable plug 303, a cable assembly 305, a vehicle connector 307, and a vehicle inlet 309. The vehicle connector 307 and the vehicle inlet 309 together form a vehicle coupler 311. There is also provided circuitry in the vehicle 315. The vehicle circuitry 315 has a connection 317 for an AC supply and a chassis connection 319.

In the circuitry between the vehicle and the EVSE there are five separate lines. Each line is separated from the other lines. The first line (top line) is a proximity pilot line. The second line is a control pilot line. The third line is power live line. The fourth line is power neutral line. The fifth line is a protective earth line.

The passive resistance of the charging cable is illustrated with the resistor (Rc) 321. The resistor 321 is on the proximity pilot line of the charging cable. The resistor 321 uses protective earth as the reference ground. This resistor 321 is conventionally provided as a proximity pilot resistor in EV charging cables. The resistor 321 is connected to the EVSE through the EVSE socket 301. As discussed above, the detection circuit 213 of the EVSE 201 is configured to detect the resistor 321 in some examples.

Figure 3b shows schematically a detailed view of an example of circuitry for a charging side and EV side, which may be connected to the EVSE 201.

The circuitry of Figure 3b shows a control pilot circuit between an EVSE (charging) section 351, and an EV section 353. The EVSE section 351 and the EV section 353 are connected with a charging cable 355.

The EVSE section 351 comprises a signal generator 357. In this circuit, the signal used is a 1 kHz square wave at ±12 volts generated by the EVSE 201. A first capacitor 359 is in parallel with the signal generator 357, with a first resistor 361 in series between them. The EVSE section 351 is connected to protective earth.

The EV section 353 comprises a second capacitor 363 in parallel with a second resistor 365 and a third resistor 367. There is provided a diode 369 in series between the second capacitor 363 and the second resistor 365. The EV section 353 is connected to earth via the chassis of the EV.

In Figure 3b, the second resistor 365 is circled as it is this resistor that the detection circuit 213 of the EVSE 201 can detect, as described in detail above. The second resistor 365 uses protective earth as the reference ground.

In other examples, the second 365 and third resistors 367 are replaced with a single equivalent resistor. The equivalent resistor may be detected by the detection circuit 213.

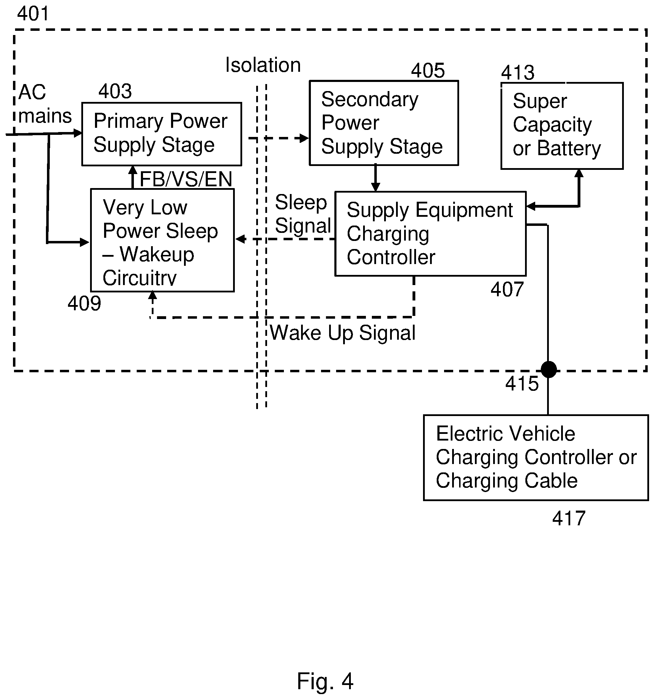

Figure 4 shows schematically a second example of circuitry for an EVSE 401 according to an embodiment of the present disclosure. The operation of the EVSE 401 is similar to the operation of the EVSE 201 from Figure 2. The EVSE 401 of Figure 4 differs in that a detection circuit is provided as part of the secondary circuit, the secondary circuit comprising a secondary power supply circuit and a controller. The detection circuit is powered by a capacitor or battery or other local store of electrical energy in this example. This will be described in more detail below.

The EVSE 401 comprises a primary power supply circuit 403. The primary power supply circuit 403 is connectable to a mains power source. In this example, the mains power source is an alternating (AC) source, provided by a national grid or the like. In other examples, the main power source may be a direct (DC) source, or other suitable power source. In use, the primary power supply circuit 403 of the EVSE 201 will receive electrical energy from the mains power source.

The EVSE 401 also comprises a secondary power supply circuit 405. The primary power supply circuit 403 and the secondary power supply circuit 405 together may form a transformer. The primary power supply circuit 403 is able to induce current in the secondary power supply circuit 405. In this way, the secondary power supply circuit 405 is galvanically isolated from the mains power source. In this way, the functional sections of primary power supply circuit 403 and the secondary power supply circuit 405 are isolated to prevent current flow between the two circuits, with no permitted direct conduction path. The arrangement of the primary power supply circuit 403 and the secondary power supply circuit 405 allow for SELV and/or PELV in the secondary power supply circuit 405, in some examples.

The secondary power supply circuit 405 is connected to a controller 407. The controller may be referred to as a charging controller or supply equipment charging controller in some examples. The secondary power supply circuit 405 and the controller 407 form a secondary circuit.

The secondary power supply circuit 405 is connected to a contact 415. The contact 415 may be a socket to receive a charging cable of an EV, in some examples. The contact 415 may be a plug of the EVSE 401 that can be plugged into an EV, in some examples.

The controller 407 is configured to provide a sleep signal to the primary power supply circuit 403 when an EV or an EV charging cable 417 is disconnected from the EVSE 401. The sleep signal may be provided to the primary power supply circuit 403 via separate sleep-wakeup circuitry 409. The sleep-wakeup circuitry 409 provides the sleep signal to the primary power supply circuit 403. The sleep signal causes the primary power supply circuit 403 to at least partially power down. In some examples, the primary power supply circuit 403 will power down completely (i.e., no electrical energy is drawn from the mains source).

When the primary power supply circuit 403 is at least partially powered down, and no power is induced/generated in the secondary power supply circuit 405, the controller 407 cannot detect a connection of an EV/charging cable of an EV 417 using control pilot or proximity pilot signals as in conventional EVSEs. This is because there is no voltage transfer/current transfer from an EV to the EVSE in many of the charging interface standards in such a situation.

The secondary circuit comprises a detection circuit (or detection mechanism) (not shown in Figure 4). The detection circuit is configured to detect the presence of an EV/charging cable of the EV 417, when the power supply circuits are powered down.

The detection circuit is powered by a capacitor or battery or other local store of electrical energy 413. In some examples, the capacitor is a super-capacitor. The capacitor or battery 413 or other local store of electrical energy is configured to be charged during normal mode and supply power to the detection circuit during sleep mode.

The detection circuit, when connected to the contact 415, is arranged to detect a resistor of an EV or EV charging cable 417. When the detection circuit detects the presence of the resistor, the detection circuit identifies that an EV 417 is connected to the EVSE 401. The secondary circuit then provides a wake-up signal to the primary power supply circuit 403. In some examples, the controller 407 of the secondary circuit provides the wake-up signal to the primary power supply circuit 403. The detection circuit may provide the wake-up signal to the primary power supply circuit 403 via the sleep-wakeup circuitry 409, in some examples. When the primary power supply circuit 403 receives the wake-up signal, the primary power supply circuit 403 will draw electrical energy from the mains source, which is used to charge the connected EV 417.

In some examples, the detection circuitry is configured to detect a passive resistor in an EV charging cable 417 on a proximity pilot signal line. In some examples, the detection circuitry is configured to detect a passive resistor in an EV 417 on a control pilot signal line. Examples of this are described in more detail above and the description thereof is not repeated here.

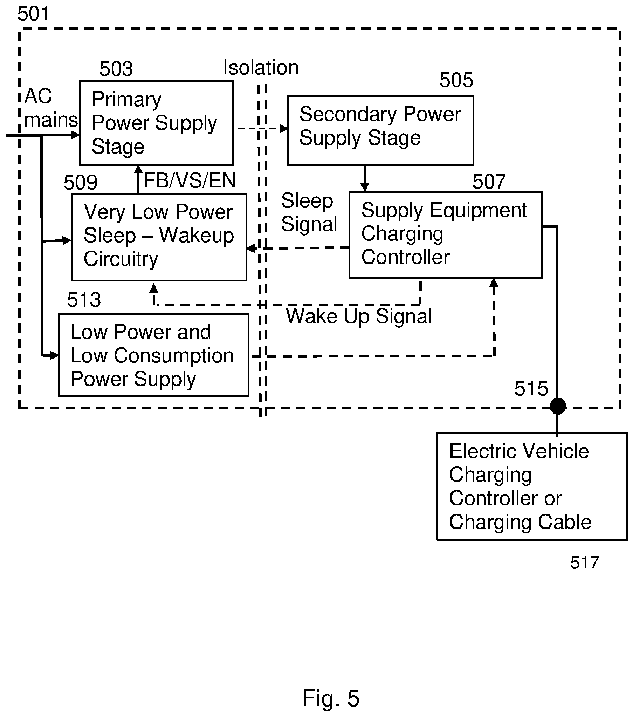

Figure 5 shows schematically a third example of circuitry for an EVSE 501 according to an embodiment of the present disclosure. The operation of the EVSE 501 is similar to the operation of the EVSE 201 of Figure 2, and the EVSE 401 of Figure 4. The EVSE 501 of Figure 5 differs from the EVSE 401 of Figure 4 in that the detection circuit/mechanism of the secondary circuit is powered by a separate low-power circuit connected to a mains source, rather than a battery/capacitor. This will be described in more detail below.

The EVSE 501 comprises a primary power supply circuit 503. The primary power supply circuit 503 is connectable to a mains power source. In this example, the mains power source is an alternating (AC) source, provided by a national grid or the like. In other examples, the main power source may be a direct (DC) source, or other suitable power source. In use, the primary power supply circuit 503 of the EVSE 501 will receive electrical energy from the mains power source.

The EVSE 501 also comprises a secondary power supply circuit 505. The primary power supply circuit 503 and the secondary power supply circuit 505 together may form a transformer. The primary power supply circuit 503 is able to induce current in the secondary power supply circuit 505. In this way, the secondary power supply circuit 505 is galvanically isolated from the mains power source. In this way, the functional sections of primary power supply circuit 503 and the secondary power supply circuit 505 are isolated to prevent current flow between the two circuits, with no permitted direct conduction path. The arrangement of the primary power supply circuit 503 and the secondary power supply circuit 505 allow for SELV and/or PELV in the secondary power supply circuit 505, in some examples.

The secondary power supply circuit 505 is connected to a controller 507. The controller 507 may be referred to as a charging controller or supply equipment charging controller, in some examples. The secondary power supply circuit 505 and the controller 507 form a secondary circuit.

The secondary power supply circuit 505 is connected to a contact 515. The contact 515 may be part of a socket to receive a charging cable of an EV, in some examples. The contact 515 may be part of a plug of the EVSE 501 that can be plugged into an EV, in some examples.

The controller 507 is configured to provide a sleep signal to the primary power supply circuit when an EV or an EV charging cable 517 is disconnected from the EVSE 501. The sleep signal may be provided to the primary power supply circuit 503 via separate sleep-wakeup circuitry 509. The sleep-wakeup circuitry 509 provides the sleep signal to the primary power supply circuit 503. The sleep signal causes the primary power supply circuit 503 to at least partially power down. In some examples, the primary power supply circuit 503 will power down completely (i.e., no electrical energy is drawn from the mains source).

When the primary power supply circuit 503 is at least partially powered down, and no power is induced/generated in the secondary power supply circuit 505, the controller 507 cannot detect a connection of an EV/charging cable of an EV 517 using control pilot or proximity pilot signals as in conventional EVSEs. This is because there is no voltage transfer/current transfer from an EV to the EVSE in many of the charging interface standards in such a situation.

The secondary circuit comprises a detection circuit (or detection mechanism) (not shown in Figure 5). The detection circuit is configured to detect the presence of an EV/charging cable of the EV 517, when the power supply circuits are powered down.

The detection circuit is powered by a low-power supply circuit 513. The low-power supply circuit 513 is connectable to the mains power source. The low-power supply circuit 513 may comprise circuitry such that the low-power supply circuit 513 consumes a small amount of electrical energy from the mains power source. The amount of electrical energy consumed by the low-power supply circuit 513 is low compared to the consumption of electrical energy used by the primary power supply circuit 503. For example, the primary power supply circuit 503 may use several watts of power while the low-power supply circuit 513 may use only a few microwatts or milliwatts. It should be understood that this is an example only, in other examples, the circuits will use different amounts of power.

The detection circuit, when connected to the contact 515, is arranged to detect a resistor of an EV or EV charging cable 517. When the detection circuit detects the presence of the resistor, the detection circuit identifies that an EV 517 is connected to the EVSE 501. The secondary circuit then provides a wake-up signal to the primary power supply circuit 503. In some examples, the controller 507 of the secondary circuit provides the wake-up signal to the primary power supply circuit 503. The detection circuit may provide the wake-up signal to the primary power supply circuit 503 via the sleep-wakeup circuitry 509, in some examples. When the primary power supply circuit 503 receives the wake-up signal, the primary power supply circuit 503 will draw electrical energy from the mains source, which is used to charge the connected EV 517.

In some examples, the detection circuitry is configured to detect a passive resistor in an EV charging cable 517 on a proximity pilot signal line. In some examples, the detection circuitry is configured to detect a passive resistor in an EV 517 on a control pilot signal line. Examples of this are described in more detail above and the description thereof is not repeated here.

In known systems, control pilot signals sent along the control pilot signal lines by the EVSE allows the EVSE to know when an EV or EV charging cable is connected to the EVSE. However, these control pilot signals, sent by the EVSE, mean that the EVSE cannot fully power down, and will still consume large amounts of standby energy. One or more of the examples discussed above allow for a lower power usage in EVSEs in sleep mode, without the use of control pilot signals. This reduction in standby power usage seen particularly in EVSEs that are always connected to a mains power supply. Therefore, energy usage is reduced when EVSEs are in powered down/standby.

It will be understood that any processor or processing system or circuitry referred to herein may in practice be provided by a single chip or integrated circuit or plural chips or integrated circuits, optionally provided as a chipset, an application-specific integrated circuit (ASIC), field-programmable gate array (FPGA), digital signal processor (DSP), graphics processing units (GPUs), etc. The chip or chips may comprise circuitry (as well as possibly firmware) for embodying at least one or more of a data processor or processors, a digital signal processor or processors, baseband circuitry and radio frequency circuitry, which are configurable so as to operate in accordance with the exemplary embodiments. In this regard, the exemplary embodiments may be implemented at least in part by computer software stored in (non-transitory) memory and executable by the processor, or by hardware, or by a combination of tangibly stored software and hardware (and tangibly stored firmware).

Reference is made herein to data storage for storing data. This may be provided by a single device or by plural devices. Suitable devices include for example an eMMC, flash memory or a hard disk and non-volatile semiconductor memory (including for example a solid-state drive or SSD).

The examples described herein are to be understood as illustrative examples of embodiments of the invention. Further embodiments and examples are envisaged. Any feature described in relation to any one example or embodiment may be used alone or in combination with other features. In addition, any feature described in relation to any one example or embodiment may also be used in combination with one or more features of any other of the examples or embodiments, or any combination of any other of the examples or embodiments. Furthermore, equivalents and modifications not described herein may also be employed within the scope of the invention, which is defined in the claims.

## Claims

1. An electric vehicle supply equipment, EVSE, for charging an electric vehicle, the EVSE comprising:
a primary power supply circuit for connection to a mains power supply to receive electrical energy from the mains power supply;
a secondary power supply circuit arranged to receive electrical energy from the primary power supply circuit;
a charging controller connected to the secondary power supply circuit, the secondary power supply circuit being arranged to provide electrical energy to the charging controller to enable the charging controller to detect and communicate with a said electric vehicle connected to the EVSE in use, the charging controller being configured to provide a sleep signal to the primary power supply circuit when a said electric vehicle or a charging cable of a said electric vehicle is disconnected from the EVSE, the sleep signal being arranged to cause the primary power supply circuit to at least partially power down;
a detection circuit for detecting connection of a said electric vehicle or a charging cable of a said electric vehicle to the EVSE; and
a contact for connection to a said electric vehicle or charging cable,
wherein the detection circuit is configured to detect a presence of a resistor of a said connected electric vehicle or a said connected charging cable via the contact, and in response, to provide a wake-up signal to the primary power supply circuit to cause the primary power supply circuit to draw electrical energy from the mains power supply and provide electrical energy for communication signalling between the EVSE and a said electric vehicle, to be able to charge a said electric vehicle.

2. The EVSE according to claim 1, comprising:
a relay circuit, the relay circuit being connected to the contact, and being configured to switch the contact between: i) the secondary power supply circuit when the primary power supply circuit is receiving electrical energy from the mains power supply, and ii) the detection circuit when the primary power supply circuit has at least partially powered down,
wherein the detection circuit is configured to detect the presence of a said resistor when the contact is connected to the detection circuit by the relay circuit.

3. The EVSE according to claim 1 or claim 2, wherein the detection circuit forms a voltage divider circuit with a said resistor of a said connected electric vehicle or a said connected charging cable , the output from the voltage divider circuit forming the wake-up signal.

4. The EVSE according to any of claims 1 to 3, wherein the detection circuit consists of passive components.

5. The EVSE according to any of claims 1 to 4, wherein the detection circuit is connectable to the mains power supply, to receive electrical energy from the mains power supply when the EVSE is in use.

6. The EVSE according to any of claims 1 to 5, wherein a said resistor of a said connected electric vehicle or a connected charging cable which is detectable by the detection circuit comprises:
a resistor on a proximity pilot signal line, and/or
a resistor on a control pilot signal line.

7. The EVSE according to claims 1 to 6, wherein the detection circuit is comprised within the secondary power supply circuit.

8. The EVSE according to claim 7, wherein the detection circuit is powered by at least one of a battery and a capacitor, comprised within the EVSE, when the primary power supply circuit has at least partially powered down.

9. The EVSE according to claim 8, wherein the battery and/or capacitor respectively is arranged to be charged while the primary power supply circuit is connected to a mains power supply.

10. The EVSE according to any of claims 7 to 9, wherein the detection circuit is powered by a low power supply circuit which is connectable to a mains power supply, wherein the low power supply circuit uses less power than the primary power supply circuit.

11. The EVSE according to any of claims 1 to 10, wherein the secondary power supply circuit is configured to receive no power from the primary power supply circuit when the primary power supply circuit has at least partially powered down.

12. A method, performed by an EVSE, for charging an electric vehicle, the method comprising:
receiving electrical energy from a mains power supply at a second power supply circuit via a primary power supply circuit;
providing electrical energy for communication signalling between the EVSE and a connected electric vehicle, through the secondary power supply circuit which is connected to the electric vehicle or a charging cable of the electric vehicle, to establish communication between the EVSE and the connected electric vehicle;
determining that the electric vehicle or the charging cable is disconnected from the EVSE;
when the electric vehicle or the charging cable is disconnected, providing a sleep signal to the primary power supply circuit, causing the primary power supply circuit to at least partially power down;
when the primary power supply circuit is at least partially powered down, detecting the presence of a resistor of a connected electric vehicle or a charging cable via a contact of the EVSE; and
in response to detecting the presence of the connected electric vehicle or charging cable, providing a wake-up signal to the primary power supply circuit, the wake-up signal causing the primary power supply circuit to receive electrical energy from the mains power supply for charging the electric vehicle.

13. The method according to claim 12, the method comprising, when the primary power supply circuit is at least partially powered down:
operating a relay circuit to connect the contact and a detection circuit of the EVSE,
wherein the detecting the presence of a resistor of a connected electric vehicle or a charging cable is performed by the detection circuit.

14. The method according to claim 13, wherein the operating a relay circuit comprises:
operating the relay circuit to switch a connection between i) the contact and the secondary power supply, to a connection between ii) the contact and the detection circuit.

15. The method according to any of claims 12 to 14, wherein the detecting the presence of a resistor of a connected electric vehicle or a charging cable comprises at least one of:
detecting a resistor on a control pilot signal line of the connected electric vehicle; and
detecting a resistor on a proximity pilot signal line of the connected charging cable.
